(19) Europäisches Patentamt
European Patent Office
Office européen des brevets

(11) Veröffentlichungsnummer: **0 103 230**
**B1**

(12) **EUROPÄISCHE PATENTSCHRIFT**

(45) Veröffentlichungstag der Patentschrift: **22.06.88**

(51) Int. Cl.⁴: **C 08 L 69/00**, C 08 L 25/10, C 08 L 51/06, C 08 L 55/02, C 08 L 85/02, C 08 K 5/03

(21) Anmeldenummer: **83108513.9**

(22) Anmeldetag: **30.08.83**

(54) **Flammwidrige Polymermischungen.**

(30) Priorität: **10.09.82 DE 3233614**

(43) Veröffentlichungstag der Anmeldung: **21.03.84 Patentblatt 84/12**

(45) Bekanntmachung des Hinweises auf die Patenterteilung: **22.06.88 Patentblatt 88/25**

(84) Benannte Vertragsstaaten: **DE FR GB IT NL**

(56) Entgegenhaltungen:
EP - A - 0 005 053
EP - A - 0 023 291
EP - A - 0 034 697
DE - A - 1 800 625
DE - A - 2 450 851
DE - A - 2 701 493
DE - A - 2 918 882
GB - A - 1 377 694
US - A - 4 223 100

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Serini, Volker, Dr., Scheiblerstrasse 81, D-4150 Krefeld (DE)**
Erfinder: **Peters, Horst, Dr., Winterberg 25, D-5090 Leverkusen 3 (DE)**
Erfinder: **Rudolph, Udo, Dr., Scheiblerstrasse 101, D-4150 Krefeld (DE)**
Erfinder: **Buekers, Josef, Kneinstrasse 58a, D-4150 Krefeld 1 (DE)**
Erfinder: **Nouvertné, Werner, Dr., Scheiblerstrasse 95, D-4150 Krefeld (DE)**
Erfinder: **Freitag, Dieter, Dr., Hasenheide 10, D-4150 Krefeld 1 (DE)**

**EP 0 103 230 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft flammwidrige Polymermischungen, die dadurch gekennzeichnet sind, dass sie

a) 5–94 Gew.% eines Polycarbonats, dessen lineare Ketten zu mindestens 85 Mol% aus wiederkehrenden Struktureinheiten der Formel (1)

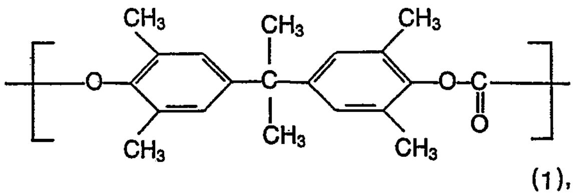

(1),

und

zu höchstens 15 Mol% aus wiederkehrenden Einheiten der Formel (2)

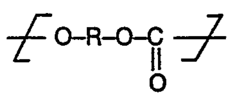

(2)

in der

–R– für einen o-, m- oder p-Phenylenrest oder einen Rest der Formel (2a)

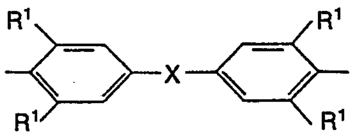

(2a)

in welcher

$R^1$ für Wasserstoff, Halogen, wie Chlor und Brom, und $C_1$–$C_3$-Alkyl steht, und

X für einen $C_1$–$C_5$-Alkylen- oder Alkylidenrest, einen $C_3$–$C_6$-Cycloalkylen- oder Cycloalkylidenrest, eine Einfachbindung, –S– oder einen Rest der Formel (2b) steht,

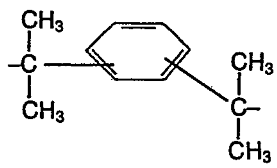

(2b)

in welcher die beiden Alkylsubstituenten in o-, m- oder p-Stellung zueinander stehen können, oder für einen Rest der Formel (2c) steht,

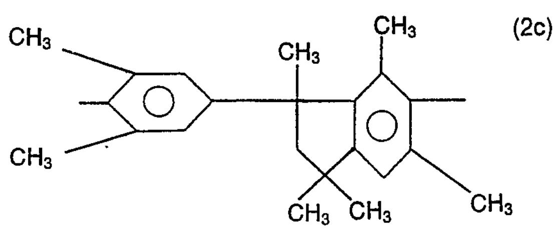

(2c)

wobei Einheiten der Formel (1) nicht umfasst sind, bestehen

b) 94–5 Gew.% eines Styrolpolymerisats und/oder eines Pfropfpolymerisats und

c) 1 bis 35 Gew.% eines verzweigten Polyphosphats mit Molekulargewichten Mw (gemessen durch Gelchromatographie, Eichung mit Bisphenol-A-Polycarbonat) von 1600 bis 150 000 und relativen Viskositäten von η rel von 1.01 bis 1.20, erhalten durch Umsetzung von mindestens 60 Mol.%, vorzugsweise mindestens 85 Mol.% und insbesondere 100 Mol.%, an Bis-(3.5-dimethyl-4-hydroxyphenyl)-methan und/oder Bis-(3.5-dimethyl-4-hydroxyphenyl)-propan und maximal 40 Mol.%, vorzugsweise maximal 15 Mol.% und insbesondere 0 Mol.%, an Diolen der Formel (17),

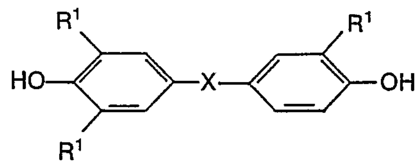

(17)

worin

X einen $C_1$–$C_5$-Alkylen- oder Alkylidenrest, einen $C_5$–$C_6$-Cycloalkylen- oder Cycloalkylidenrest, eine Einfachbindung, –S– oder

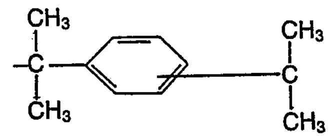

und $R^1$ H oder $CH_3$ bedeutet, und/oder der Formel (18)

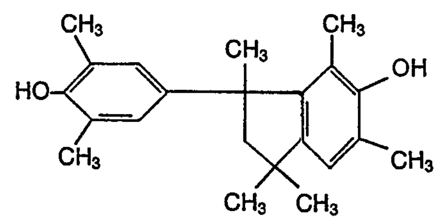

(18)

mit Phosphorsäureestern der Formel (19)

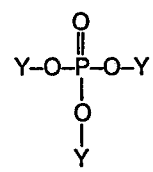

(19)

worin

Y Alkyl-, Cycloalkyl-, Aryl- oder Alkylaryl-Reste bedeuten und gleich oder ungleich sein können, in Molverhältnis aromatisches Diol/Phosphat von 0.66/l bis 2.3/l in Gegenwart basischer Alkali- oder Erdalkaliverbindungen unter Abspaltung von Alkohol bzw. Phenol bei Temperaturen von 100 °C bis 350 °C,

d) 0–20 Gew.% einer oder mehrerer organischer Chlor- und/oder Bromverbindungen, die nur aromatisch gebundenes Chlor und/oder Brom enthalten, eine Zersetzungstemperatur oberhalb 250 °C aufweisen und bis mindestens 300 °C bei Normaldruck nicht sieden, und

e) 0–1 Gew.% Polytetrafluorethylen

enthalten.

Das unter a) genannte Polycarbonat ist entweder ein Copolycarbonat mit mindestens 85 Mol% aus wiederkehrenden Struktureinheiten der Formel (1) und höchstens 15 Mol% aus wiederkehrenden Struktureinheiten der Formel (2) oder ein Polycarbonat nur aus wiederkehrenden Struktureinheiten der Formel (1).

Den Struktureinheiten der Formel (1) liegt das 2,2-Bis-(3,5-dimethyl-4-hydroxyphenyl)-propan zugrunde. Den Struktureinheiten der Formel (2) liegen aromatische Diole, zum Beispiel Hydrochinon, Resorcin, Dihydroxydiphenyle, Bis-(hydroxyphenyl)-alkane, Bis-(hydroxy-phenyl)-cycloalkane, Bis-(hydroxyphenyl)-sulfide, Bis-(hydroxyphenyl)-ether, Bis-(hydroxyphenyl)-sulfone, α,α'-Bis-(hydroxyphenyl)-diisopropylbenzole sowie deren kernalkylierte und kernhalogenierte Abkömmlinge, zugrunde.

Diese und weitere geeignete aromatische Dihydroxyverbindungen sind z.B. in US-PS 3 028 365, 2 999 835, 3 148 172, 3 271 368, 2 991 273, 3 271 367, 3 780 078, 3 014 891, 2 999 846, in DE-OS 2 063 050, 2 211 957, 1 570 703, 2 329 585, 2 329 646 und in der Monographie «Hermann Schnell, Chemistry and Physics of Polycarbonates, Polymer Reviews, Volume 9, Interscience Publishers, New York, 1964,» beschrieben.

Bei der Herstellung der Polycarbonate werden vorzugsweise Rohbisphenole eingesetzt, wie sie aus 2,6-Dimethylphenol nach den Verfahren der DE-OS 2 928 464 und der DE-OS 2 928 443 hergestellt werden können. In diesem Fall können bis zu 15 Gew.-% Nebenprodukte im Reaktionsgemisch vorhanden sein. Dieses Reaktionsgemisch kann ohne vorherige Reinigung bei der Herstellung der Polycarbonate eingesetzt werden.

Bevorzugte Copolycarbonate mit wiederkehrenden Struktureinheiten der Formel (1) enthalten mindestens 90 Gew.% dieser Struktureinheiten. Ganz besonders bevorzugt sind Polycarbonate die ausschliesslich wiederkehrende Struktureinheiten der Formel (1) enthalten.

Die Herstellung erfindungsgemäss einsetzbarer Polycarbonate erfolgt nach bekannten Verfahren, beispielsweise nach der DE-OS 2 063 050, 2 211 957, 2 901 665 und 2 901 668. Diese Polycarbonate besitzen Molekulargewichte $\overline{M}_w$ (Gewichtsmittel) von 10 000–200 000, bevorzugt von 20 000–80 000, besonders bevorzugt von 25 000–60 000 und ganz besonders bevorzugt von 30 000–45 000.

Für die Einstellung der gewünschten Molekulargewichte $\overline{M}_w$ der erfindungsgemäss einsetzbaren aromatischen Polycarbonate können Kettenabbrecher in den üblichen Mengen verwendet werden. Geeignete Kettenabbrecher sind beispielsweise Phenole wie Phenol, o-, m-, p-Kresol, 2,6-Dimethylphenol, p-tertiär-Butylphenol und p-Isooctyphenol.

Die erfindungsgemäss einsetzbaren Polycarbonate können verzweigt sein. Dies wird durch den Einbau geringer Mengen, vorzugsweise von Mengen zwischen 0,05 und 2,0 Mol% (bezogen auf eingesetzte Diphenole), an drei- oder mehr als dreifunktionellen Verbindungen erreicht. Als dreifunktionelle Verbindungen werden vorzugsweise solche mit drei oder mehr als drei phenolischen Hydroxygruppen eingesetzt. Die Herstellung von verzweigten Polycarbonaten dieser Art ist z.B. in den DE-OS 1 570 533, 1 596 762, 2 116 974, 2 113 347, GB-PS 1 079 821 und 1 476 108 sowie der US-PS 3 544 514 beschrieben.

Styrolpolymerisate im Sinne dieser Erfindung sind Homo- und Copolymerisate von Styrolen, Acryl- und Methacrylverbindungen und Maleinsäureanhydrid, die im allgemeinen zu mindestens 10 Gew.-%, bevorzugt zu mindestens 40 Gew.%, und besonders bevorzugt zu mindestens 60 Gew.% aus einem oder mehreren Styrolen bestehen.

Unter Styrolen sind Styrol und seine Derivate, wie z.B. Styrol, α-Methylstyrol, p-Methylstyrol, α-Chlorstyrol und p-Chlorstyrol zu verstehen. Bevorzugt werden Styrol und α-Methylstyrol, besonders bevorzugt Styrol.

Weiterhin werden Acryl- und Methacrylsäure sowie deren Alkylester, z.B. Methyl-, Äthyl-, Propyl-, Butyl- und Octylester, deren Nitrile, wie Acrylnitril und Methacrylnitril eingesetzt. Bevorzugt werden Acrylnitril und Methylmethacrylat.

Bevorzugte Styrolpolymerisate sind Polystyrol, Styrol-Acrylnitril-Copolymere, insbesondere Styrol-Acrylnitril-Copolymere mit Acrylnitril-Gehalten von 1,5 bis 15 Gew.-%, Styrol-Methylmethacrylat-Copolymere und Styrol-Maleinsäureanhydrid-Copolymere.

Pfropfpolymerisate im Sinne dieser Erfindung sind Kautschuk enthaltende Polymere, die durch Pfropf-Copolymerisation eines oder mehrerer der obengenannten Monomeren auf einen Kautschuk, z.B. Dienkautschuk, Ethylen-Propylen-Dien-Kautschuk oder Acrylatkautschuk nach bekannten Verfahren erhalten werden können.

Unter Dienkautschuken werden Homopolymerisate von konjugierten Dienen mit 4–8 C-Atomen, z.B. Butadien, Isopren und Chloropren, Copolymerisate solcher Diene untereinander und Copolymerisate solcher Diene mit anderen Monomeren, insbesondere mit bis zu 50 Gew.% der obengenannten, verstanden. Solche Dienkautschuke sind beispielsweise Polybutadien, Polyisopren, Butadien-Styrol-Copolymere, Butadien-Acrylnitril-Copolymere, Butatien-Methylmethacrylat-Copolymere und Butadien-Acrylsäurebutylester-Copolymere. Ethylen-Propylen-Dien-Kautschuke sind beispielsweise solche, die als Dien Hexadien-1,5, Norbornadien oder Äthylidennorbornen enthalten. Acrylatkautschuke sind beispielsweise vernetzte oder unvernetzte Polymerisate aus Acrylsäurealkylestern, ggf. mit bis zu 40 Gew.% anderer polymerisierbarer ethylenisch ungesättigter Monomerer. Zu den Acrylsäurealkylestern gehören bevorzugt $C_1$–$C_8$-Alkylester, z.B. Methyl-, Ethyl-, Butyl-, Octylester, insbesonders der Butylester. Acrylatkautschuke sind beispielsweise in der Deutschen Patentanmeldung P 3 118 861.3 beschrieben. Die verzweigten Polyphosphate die, erfindungsgemäss als Mischungspartner dienen, werden durch Umsetzung von aromatischen Diolen mit Phosphorsäureestern in Gegenwart basischer Katalysatoren, wie Erdalkali- bzw. Alkaliverbindungen, hergestellt.

Die Umsetzung der aromatischen Diole mit Phosphorsäureestern wird im allgemeinen wie folgt vorgenommen: Der Phosphorsäureester wird vorgelegt und gegebenenfalls aufgeschmolzen, wenn er als Feststoff vorliegt. Zu dem Phosphorsäureester wird das aromatische Diol gegeben und unter Erwärmen gelöst. Dann wird der Katalysator zugegeben. Bei erhöhter Temperatur setzt dann die Abspaltung von Alkohol bzw. Phenol unter Bildung der Polyphosphate ein. Der abgespaltene Alkohol bzw. das abgespaltene Phenol wird abdestilliert. Zurück bleibt das entstandene verzweigte Polyphosphat.

Bei Einsatz mehrerer aromatischer Diole oder mehrerer Phosphorsäureester wird analog verfahren. Die Reihenfolge des Zusammengebens der Ausgangskomponenten kann anders sein als oben beschrieben. Auch ist für die Reaktion eine Löslichkeit der Komponenten ineinander nicht unbedingt notwendig, wenn auch günstig. Der Zugabezeitpunkt des Katalysators nach dem Aufschmelzen der Ausgangskomponenten ist nicht kritisch. Die Zugabe kann vor oder während des Aufschmelzens von Ausgangskomponenten erfolgen. Es kann auch von Nutzen sein, noch während der Reaktion Katalysator nachzugeben, um eine ausreichende Reaktionsgeschwindigkeit aufrechtzuerhalten. Der Katalysator braucht nicht oder nicht voll in der Reaktionsmischung gelöst zu sein, obwohl dies für die Reaktion und die Qualität des erhaltenen Produktes günstig sein kann.

Das Aufschmelzen der Ausgangskomponenten erfolgt im allgemeinen bei Temperaturen von 50–300 °C, bevorzugt bei 100–250 °C, besonders bevorzugt bei 125–225 °C. Die Zugabe des Katalysators erfolgt bevorzugt nach Aufschmelzen der Ausgangskomponenten. Besonders günstig für den Start und den Fortgang der Reaktion ist eine Zugabe des Katalysators bei 100–250 °C, bevorzugt bei 125–225 °C.

Die Reaktionstemperatur wird so niedrig wie möglich gehalten, im allgemeinen liegt sie bei 100–350 °C, bevorzugt bei 125–300 °C, besonders bevorzugt bei 150–250 °C. Die Reaktionstemperatur liegt in der Anfangsphase, in der der Hauptteil des Alkohols bzw. des Phenols (ca. 90%) abgespalten wird, bei möglichst niedriger Temperatur, bevorzugt bei 100–250 °C, besonders bevorzugt bei 125–225 °C.

Die Polykondensation erfolgt mit Vorteil unter vermindertem Druck, da hierdurch der Alkohol bzw. das Phenol schnell aus dem Reaktionsgemisch entfernt wird. Im allgemeinen wird bei Drukken zwischen 600 und 0,01 mm Hg, bevorzugt bei Drucken zwischen 400 und 0,025 mm Hg, besonders bevorzugt bei Drucken zwischen 250 und 0,05 mm Hg gearbeitet.

Während im allgemeinen die Abspaltung der Hauptmenge des Alkohols bzw. des Phenols (ca. 90%) zwischen 600 und 10 mm Hg erfolgt, werden die Restmengen zwischen 10 und 0,01 mm Hg abdestilliert. Etwa notwendig werdender Druckausgleich wird mit Inertgas geschaffen, z.B. mit $CO_2$ oder $N_2$, so dass Luftsauerstoff von dem Reaktionsmedium weitgehend ferngehalten wird. Auch das Aufschmelzen der Reaktanden erfolgt im allgemeinen unter Inertgas.

Der Restgehalt an abgespaltenem Alkohol bzw. an abgespaltenem Phenol im Polyphosphat beträgt im allgemeinen unter 2%, bevorzugt unter 1%, besonders bevorzugt unter 0,5% und ganz besonders bevorzugt unter 0,1%, bezogen auf das erhaltene Polyphosphat.

Bei der Umsetzung der aromatischen Diole mit Phosphaten werden im allgemeinen 1,0–0,0001, bevorzugt 0,5–0,0005, besonders bevorzugt 0,05–0,0005 Mol Alkali oder Erdalkali/Mol Phosphat eingesetzt. Der Ausdruck Alkali bzw. Erdalkali bezieht sich auf die Elemente, z.B. Li, Na, K, Ca und Ba in den basischen Alkali- oder Erdalkaliverbindungen. Bei Einsatz hoher Alkali- oder Erdalkalimengen ist wegen der erhöhten Abspaltgeschwindigkeit der Alkohole bzw. Phenole bei besonders niedriger Temperatur und bei nur leicht reduziertem Druck mit der Polykondensation zu beginnen.

Die erfindungsgemässen Polyphosphate enthalten ionische Gruppen, die dadurch entstehen können, dass endständige OH-Gruppen durch Reaktion mit basischen Verbindungen, z.B. durch Reaktion mit den als Katalysator eingesetzten Alkali- oder Erdalkaliverbindungen Salze, z.B. $-O^{\ominus}$ $Me^{\oplus}$, $-O^{\ominus}$ ½ $Me^{\oplus\oplus}$ bilden ($Me^{\oplus}$ bedeutet z.B. Alkaliion wie $Li^{\oplus}$, $Na^{\oplus}$, $K^{\oplus}$, und $Me^{\oplus\oplus}$ z.B. Erdalkaliion wie $Ca^{\oplus\oplus}$, $Ba^{\oplus\oplus}$).

Bei der Herstellung der erfindungsgemäss verwendbaren Polyphosphate werden die aromatischen Diole und die monomeren Phosphate im Verhältnis 0,66/1–2,3/1 Molteile eingesetzt. Bevorzugt werden Verhältnisse von 0,66/1–0,96/1 und 2,3/1–1,6/1, besonders bevorzugt werden Verhältnisse von 0,75/1–0,96/1 und 2,2/1–1,6/1, ganz besonders bevorzugt werden Verhältnisse von 0,8/1–0,92/1 und 2,1/1–1,7/1.

Die Anzahl der ionischen Gruppen hängt von der eingesetzten Katalysatormenge ab. Im allgemeinen werden verzweigte ionische Polyphosphate bevorzugt, die ionische Gruppen entsprechend der bevorzugt eingesetzten Katalysatormenge aufweisen. In besonderen Fällen jedoch kann es erwünscht sein, den Gehalt an ionischen Gruppen auf ein besonders hohes oder besonders niedriges Mass zu bringen. Im ersten Falle werden dann bei der Polykondensation besonders hohe Katalysatormengen, im zweiten Falle besonders niedrige Katalysatormengen verwendet.

Auch durch Zusatz von basenbindenen Substanzen kann der Gehalt von ionischen Gruppen beeinflusst und zwar heruntergesetzt werden. Solche basenbindenden Substanzen sind beispielsweise Dialkylsulfate wie Dimethylsulfat, Diethylsulfat oder organische Säuren wie Toluolsulfonsäure. Im allgemeinen werden diese Verbindungen in der gewünschten Menge gegen Schluss der Polykondensation in die Polymerschmelze gegeben. Danach wird dann noch eine für die Umsetzung dieser Substanzen mit den ionischen Gruppen ausreichende Reaktionszeit vor Beendigung der Kondensation eingehalten.

Die erfindungsgemäss verwendbaren verzweigten Polyphosphate können bei 20 °C zähflüssige oder mehr oder weniger plastische Harze darstellen. Sie weisen dann Glastemperaturen unter 20 °C auf. Sie können auch vorzugsweise harte thermoplastische Harze darstellen, die Glastemperaturen $T_g$ über 20 °C besitzen. Besonders bevorzugt sind solche mit Glastemperaturen $T_g$ über 40 °C, ganz besonders bevorzugt die mit Glastemperaturen über 60 °C, insbesondere über 70 °C.

Die in dieser Erfindung eingesetzten Polyphosphate haben im allgemeinen fiktive Molekulargewichte $\overline{M}_w$ (gemessen durch Gelchromatographie, Eichung mit Bisphenol A-Polycarbonat) von 1600–150 000, bevorzugt von 2300 bis 50 000, besonders bevorzugt von 3200–25 000 und ganz besonders bevorzugt von 5000–20 000.

Die mittleren Polykondensationsgrade $\bar{P}$ der eingesetzten, Polyphosphate liegen im allgemeinen bei $\bar{P}$ = 3–30, bezogen auf Phosphatgruppen im Polyphosphat. Bevorzugt werden Polykondensationgrade von $\bar{P}$ = 4–25, besonders bevorzugt 7–20.

Die relative Viskosität der eingesetzten Polyphosphate liegt im allgemeinen bei 1,01–1,20, bevorzugt bei 1,02–1,18, besonders bevorzugt bei 1,03–1,15 (gemessen in $CH_2Cl_2$, c = 0,5 g/l).

Aromatische Diole der Formel (17) sind beispielsweise:

2,2-Bis-(4-hydroxyphenyl)-propan
2,2-Bis-(4-hydroxyphenyl)-butan
2,4-Bis-(4-hydroxyphenyl)-2-methylbutan
1,1-Bis-(4-hydroxyphenyl)-cyclohexan
Bis-(4-hydroxyphenyl)
Bis-(4-hydroxyphenyl)-sulfid
α,α'-Bis-(4-hydroxyphenyl)-p-diisopropylbenzol
2-(3-Methyl-4-hydroxyphenyl)-2-(4-hydroxyphenyl)-propan
2,2-Bis-(3-methyl-4-hydroxyphenyl)-propan
2-(3,5-Dimethyl-4-hydroxyphenyl)-2-(4-hydroxyphenyl)-propan
2-(3-Methyl-4-hydroxyphenyl)-2-(3,5-dimethyl-4-hydroxyphenyl)-propan

Besonders bevorzugt von den aromatischen Diolen der Formel (17) sind die, in denen $R^1$ zumindest teilweise $CH_3$ bedeutet, insbesondere jedoch, wenn zwei Methylgruppen orthoständig zu einer phenolischen OH-Gruppe sind, und das aromatische Diol der Formel (18).

Bevorzugt werden auch Polyphosphate, denen Rohbisphenole zugrundeliegen, wie sie aus 2,6-Dimethylphenol nach den Verfahren der DE-OS 2 928 464 und 2 928 443 hergestellt werden können, wobei auch technisches Kresol verwendet werden kann.

Die für die Herstellung der erfindungsgemäss verwendbaren Polyphosphate benötigten Phosphorsäureester haben die Formel (19):

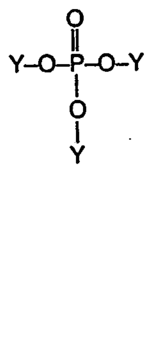 (19),

in der

Y Alkyl-, Cycloalkyl-, Aryl- oder Alkylaryl-Reste bedeutet, die gleich oder ungleich sein können.

Die Reste Y können substituiert sein, z.B. mit Halogen.

Beispiele für Akylgruppen sind: Methyl, Ethyl, Propyl, Butyl, Pentyl, Hexyl, Heptyl, Octyl, Nonyl, Decyl, Undecyl, Dodecyl und deren Isomere, beispielsweise Neopentyl, 3,5,5-Trimethylhexyl, 3-Methylhexyl, 2-Ethylhexyl, 2,5,5-Trimethylhexyl, weiterhin Cyclohexyl, 2-Chlorethyl und 2,3-Dibrompropyl.

Beispiele für Aryl- und Alkylarylreste sind Phenyl, o-, m-, p-Methylphenyl, 2,6-Dimethylphenyl, 2,4-Dimethylphenyl, 2,4,6-Trimethylphenyl, 2- und 4-Isopropylphenyl, Nonylphenyl, 4-tert.-Butylphenyl, 4-Chlorphenyl, Diphenyl, 2,4,6-Trichlorphenyl, 4-Bromphenyl, 2,4,6-Tribromphenyl, Naphthyl, Benzyl.

Von den genannten Resten Y werden die Arylreste bevorzugt, insbesondere die halogenfreien.

Von diesen wiederum werden die Phenyl-, die o-, m-, p-Methylphenyl- und die 2,6-Dimethylphenylreste besonders bevorzugt.

Phosphorsäureester der Formel (19) sind beispielsweise:

Bis-(phenyl)-methylphospat
Bis-(ethyl)-phenylphosphat
Bis-(ethyl)-2,6-dimethylphosphat
Bis-(phenyl)-ethylphosphat
Tris-(2-chlorethyl)-phosphat
Bis-(phenyl)-2-chlorethylphosphat
Bis-(butyl)-phenylphosphat
Bis-(phenyl)-butylphosphat
Bis-(neopentyl)-phenylphosphat
Bis-(4-methylphenyl)-2-ethylhexylphosphat
Bis-(2-ethylhexyl)-phenylphosphat
Bis-(2-ethylhexyl)-4-methylphenylphosphat
Bis-(phenyl)-2-ethylhexylphosphat
Tris-(octyl)-phosphat
Bis-(phenyl)-octylphosphat
Bis-(octyl)-phenylphosphat
Bis-(3,5,5-trimethylhexyl)-phenylphosphat
Bis-(2,5,5-trimethylhexyl)-4-methylphenylphosphat
Bis-(phenyl)-isodecylphosphat
Bis-(dodecyl)-4-methylphenylphosphat
Bis-(dodecyl)-phenylphosphat
Tris-(phenyl)-phosphat
Tris-(2-methylphenyl)-phosphat
Tris-(4-methylphenyl)-phosphat
Bis-(2-methylphenyl)-phosphat
Bis-(4-methylphenyl)-phosphat
Bis-(phenyl)-2-methylphenylphosphat
Bis-(phenyl)-4-methylphenylphosphat
Tris-(isopropylphenyl)-phosphat
Bis-(isopropylphenyl)-phenylphosphat
Bis-(phenyl)-isopropylphenylphosphat
Tris-(nonylphenyl)-phosphat
Tris-(2,6-dimethylphenyl)-phosphat
Bis-(2,6-dimethylphenyl)-phenylphosphat
Bis-(phenyl)-2,6-dimethylphenylphosphat
Bis-(2,6-dimethylphenyl)-4-tert.-butylphenylphosphat
Bis-(2,6-dimethylphenyl)-4-methylphenylphosphat

Bis-(2,6-dimethylphenyl)-3-methylphenylphosphat
Bis-(2,6-dimethylphenyl)-4-isopropylphenylphosphat und
Bis-(2,6-dimethylphenyl)-2-isopropylphenylphosphat

Bevorzugte Phosphorsäureester der Formel (19) sind Triarylester. Besonders bevorzugte Phosphorsäureester der Formel (19) sind Triarylester mit drei gleichen Arylresten oder mit mindestens zwei 2,6-Dimethylphenylresten wie
Tris-(phenyl)-phosphat
Tris-(2-methylphenyl)-phosphat
Tris-(4-methylphenyl)-phosphat
Tris-(isopropylphenyl)-phosphat
Tris-(2,6-dimethylphenyl)-phosphat
Bis-(2,6-dimethylphenyl)-phenylphosphat
Bis-(2,6-dimethylphenyl)-2-methylphenylphosphat
Bis-(2,6-dimethylphenyl)-4-methylphenylphosphat und
Bis-(2,6-dimethylphenyl)-isopropylphenylphosphat

Besonders bevorzugte Triarylester sind das Triphenylphosphat und das Tri-(2,6-dimethylphenyl)-phosphat.

Für die Herstellung der erfindungsgemäss eingesetzten Polyphosphate werden als Katalysator basisch wirkende anorganische oder organische Alkali- und Erdalkaliverbindungen verwendet. Solche Verbindungen sind beispielsweise:

Metalle zum Beispiel Li, Na, K, Ca; Hydride wie LiH, NaH, KH, $CaH_2$; Oxide wie $Li_2O$, $Na_2O$, $K_2O$, CaO, BaO; Hydroxide wie LiOH, NaOH, KOH, $Ba(OH)_2$, $Sr(OH)_2$, $Ca(OH)_2$; Alkaliborhydride wie $NaBH_4$; Amide der Alkalimetalle wie Li-, Na- und K-amid; Alkali- und Erdalkalialkoholate wie Methylate, Ethylate, Propylate, Butylate, Cyclohexanolate des Li, Na, K oder Ca; Phenolate, wie die Li-, Na-, K-Salze des Phenols, des o-, m-, p-Kresols, des 2,6-Dimethylphenols Bis-Alkalisalze von aromatischen Dihydroxyverbindungen wie die Li-, Na-, und K-Salze des 2,2-Bis-(4-hydroxyphenyl)-propans, oder des 2,2-Bis-(3,5-dimethyl-4-hydroxyphenyl)-propans.

Bevorzugt werden die Alkaliverbindungen und von diesen die Na- und K-Verbindungen. Besonders bevorzugt werden davon wiederum die Hydroxide, Alkoholate, Phenolate und Bisphenolate. Ganz besonders bevorzugt wird das Na-Phenolat.

Als organische Chlor- und/oder Bromverbindungen werden erfindungsgemäss Verbindungen eingesetzt, die nur aromatisch gebundenes Chlor oder Brom enthalten, die Zersetzungstemperaturen oberhalb von 250 °C aufweisen und die bei Normaldruck bis mindestens 300 °C nicht sieden.

Bevorzugt eingesetzte Chlor- und Bromverbindungen sind beispielsweise:

1) Chlorierte und bromierte Diphenyle, wie Octachlordiphenyl, Decachlordiphenyl, Octobromdiphenyl, Decabromdiphenyl.

2) Chlorierte und bromierte Diphenylether, wie Octa- und Decachlordiphenylether und Octa- und Decabromdiphenylether.

3) Chloriertes und bromiertes Phthalsäureanhydrid und seine Abkömmlinge, wie Phthalimide und Bisphthalimide, z.B. Tetrachlor- und Tetrabromphthalsäureanhydrid, Tetrachlor- und Tetrabromphthalimid, N-Methyltetrachlor- und N-Methyltetrabromphthalimid, N,N′-Ethylen-bis-tetrachlor- und N,N′-Ethylen-bis-tetrabromphthalimid.

4) Chlorierte und bromierte Bisphenole, wie 2,2-Bis-(3,5-dichlor-4-hydroxyphenyl)-propan und 2,2-Bis-(3,5-dibrom-4-hydroxyphenyl)-propan.

5) 2,2-Bis-(3,5-dichlor-4-hydroxyphenyl)-propan-Oligocarbonat und 2,2-Bis-(3,5-dibrom-4-hydroxyphenyl)-propan-Oligocarbonat mit einem mittleren Polykondensationsgrad von 2–20.

6) Chlorierte und bromierte Polystyrole.

7) Chloriertes und bromiertes Polyphenylenoxid.

Die Bromverbindungen werden gegenüber den Chlorverbindungen bevorzugt. Von den Bromverbindungen sind besonders bevorzugt der Decabromdiphenyläther, das N,N′-ethylen-bis-tetrabromphthal-imid und 2,2-Bis-(3,5-dibrom-4-hydroxyphenyl)-propan-Oligocarbonat.

Erfindungsgemäss kann marktübliches Polytetrafluorethylen eingesetzt werden, vorteilhaft in pulveriger, feinteiliger Form.

Die erfindungsgemässen flammwidrigen Polymermischungen weisen ein Eigenschaftsspektrum auf, das für die Technik interessant ist. So zeigen sie hohe Brandwidrigkeit, eine geringe Abtropfneigung beim Brennen und hohe Verarbeitungsstabilität, die z.B. daran erkennbar ist, dass die Schmelze geringe Neigung zur Verfärbungen oder Abspaltung von Gasen zeigt, die sich an den Formteilen als Verfärbungen und Schlieren wiederfinden. Sie zeigen weiterhin eine gute Fliessfähigkeit in der Schmelze und hohe Festigkeiten der Formteile an den Fliessnähten. Weiterhin zeigen sie gute Zähigkeit, hohe Oberflächengüte der Formteile und geringe elektrostatische Aufladbarkeit. Hervorzuheben ist die Wärmestandfestigkeit, selbst bei hohen Polyphosphat-Anteilen.

Diese Eigenschaften sind zum Teil dadurch bedingt, dass die genannten Polyphosphate verträglich mit den verwendeten Polycarbonaten, Styrolpolymerisaten und Pfropfpolymerisaten sind. So sind beispielsweise Polyphosphate auf Basis von 2,2-Bis-(3,5-dimethyl-4-hydroxyphenyl)-propan in Mischung mit dem Polycarbonat auf derselben Basis und Polystyrol oder Styrol-Acrylnitril-Copolymeren einphasig.

Die flammwidrigen Polymermischungen dieser Erfindung lassen sich zu Formkörpern, Platten, Folien, Fasern, Beschichtungen und anderem mehr verarbeiten. Sie lassen sich in Mischungen mit Füllstoffen und Verstärkungsstoffen, z.B. Mineralien und Glasfasern, Russ, Farbstoffen und Pigmenten, Stabilisatoren, Gleitmitteln und Entformungshilfsmitteln gut verwenden. Sie sind insbesondere dort von Vorteil, wo es auf Flammwidrigkeit bei hoher Wärmestandfestigkeit, Hydrolysestabilität, Oberflächengüte und Elektroisoliereigenschaften ankommt. So können sie beispielsweise mit Vorteil zur Herstellung von Bauteilen für elektrisch betriebene Geräte wie Gehäuse oder

Gehäuseteile und Isolatoren für stromführende Teile oder zur Herstellung von Bauteilen in Automobilen, wie Verkleidungen, Armaturentafeln und Bauteilen im Motorraum, verwendet werden.

Gegenstand der vorliegenden Erfindung ist somit auch die Verwendung der Polymermischungen als Überzüge für Formteile oder zur Herstellung von Formkörpern.

Beispiele

Beispiel 1:

Eingesetzte Polymere und Bromverbindungen

a) MPC

2,2-Bis-(3,5-dimethyl-4-hydroxyphenyl)-propan-Polycarbonat η rel = 1,301 (in $CH_2Cl_2$, c = 5 g/l), Glasübergangstemperatur $T_g$ = 203 °C (aus Differentialthermoanalyse).

b) MPC I

Polycarbonat wie MPC, jedoch η rel = 1,61 (in $CH_2Cl_2$, c = 5 g/l), Glasübergangstemperatur Tg = 206 °C, wurde für Bsp. 5 mit MPO über eine Chlorbenzollösung gemischt und über eine Ausdampfextrusion als MPC I/MPO-Mischung erhalten.

c) MPC-ROH

Polycarbonat aus einem Rohbisphenol mit 95 Gew.% 2,2-Bis-(3,5-dimethyl-4-hydroxyphenyl)-propan, unter 0,1 Gew.% 2,6-Dimethylphenol und 4,9 Gew.% nicht spezifizierter Komponenten (Rohbisphenol erhalten nach DE-OS 2 928 464, Bsp. 1), rel = 1,298 (in $CH_2Cl_2$, c = 5 g/l), Glasübergangstemperatur Tg = 202 °C.

d) HIPS (High impact polystyrene)

Emulsionspfropfpolymerisat aus 35 Gew.% Polybutadien mit 65 Gew.% Polystyrol.

e) ABS

Emulsionspfropfpolymerisat aus 25 Gew.% Polybutadien mit 75 Gew.% Styrol-Acrylnitril-Copolymer 90/10 Gew.-Teile.

f) ACRYLAT

Pfropfpolymerisat mit Kern-Mantel-Struktur der folgenden Zusammensetzung n-Butylacrylat/Butandiol-1,3-diacrylat/Diallylmaleat/Methylmethacrylat = 79,2/0,4/0,4/20,0.

g) SMA

Styrol-Maleinsäureanhydrid-Copolymer 89/11 Gew.-Teile, Glasübergangstemperatur Tg = 128 °C.

h) PST

Polystyrol, Glasübergangstemperatur Tg = 101 °C.

i) SAN

Styrol-Acrylnitril-Copolymer 90/10 Gew.%, Glasübergangstemperatur Tg = 107 °C.

j) PTFE

Polytetrafluorethylen

k) MPO

2,2-Bis-(3,5-dimethyl-4-hydroxyphenyl)-propan-Polyphosphat, hergestellt aus 2,2-Bis-(3,5-dimethyl-4-hydroxyphenyl)-propan und Triphenylphosphat (Verhältnis 0,91/1) mit Na-Phenolat als Katalysator), η rel = 1,07 (in $CH_2Cl_2$, c = 5 g/l), Glasübergangstemperatur Tg = 84 °C.

l) MPO I

Bis-(3,5-dimethyl-4-hydroxyphenyl)-methan-Polyphosphat, hergestellt wie MPO, η rel = 1,08 (in $CH_2Cl_2$, 5 g/l), Glasübergangstemperatur Tg = 71 °C.

m) DBDPE

Decabromdiphenylether

Beispiele 2–6:

Flammwidrige Polymermischungen

Über einen Doppelwellenextruder wurden bei Schmelztemperaturen von 260–300 °C die aus der Tab. Bsp. 2–6 hervorgehenden Polymerlegierungen hergestellt. Wie aus der Tabelle ersichtlich, werden flammwidrige Legierungen erhalten.

Tabelle Bsp. 2–6: Flammwidrige Polymermischungen

| Bsp. | Mischungsbestandteile (s. Bsp. 1) in Gew. % | Eigenschaften der Legierungen UL | $a_k$ | $a_n$ | $a_{nF}$ | Vicat B (°C) | Verarbeitungs-stabilität (°C) | Hydrolyse NaOH 10%ig |
|---|---|---|---|---|---|---|---|---|
| 2 | MPC/HIPS/MPO/DBDPE/PTFE 29,9/44,9/15,0/10,0/0,2 | VO | 8 | ng | 5 | 111 | >300 | n |
| 3 | MPC/HIPS/MPO/DBDPE/PTFE 47,9/31,9/10,0/10,0/0,2 | VO | 8 | ng | 5 | 133 | >300 | n |
| 4 | MPC–ROH/HIPS/MPO/DBDPE/PTFE 60,8/26,0/5,0/8,0/0,2 | VO | 9 | ng | 5 | 152 | >300 | n |
| 5 | MPC/ABS/MPO/DBDPE/PTFE 47,9/31,9/10,0/10,0/0,2 | VO | 10 | ng | 8 | 139 | >300 | n |
| 6 | MPCI/ACRYLAT/MPO/PTFE 59,9/10,0/29,9/0,2 | VO | 7 | 80-ng | 5 | 156 | >300 | n |

UL = Flammwidrigkeit nach UL Subj. 94, Prüfstäbe 1/8 und 1/16″; $a_k$ = Kerbschlagzähigkeit (kJ/$m^2$) nach DIN 53453; $a_n$ = Schlagzähigkeit (kJ/$m^2$) nach DIN 53453; $a_{nF}$ = Fliessnahtfestigkeit = Schlagzähigkeit $a_n$ an beidseitig angespritztem Prüfkörper mit Zusammenfliessnaht in der Mitte; Vicat B = Wärmestandfestigkeit nach Vicat Methode B (DIN 53460); Hydrolyse in 10%-iger wässriger NaOH bei 100 °C über 400 Stunden; ng = nicht gebrochen; n = nicht angegriffen.

Beispiele 7–12:
Verträglichkeit der Polyphosphate mit Polystyrolharzen und MPC

Die Ergebnisse der Verträglichkeitsuntersuchungen in Tabelle Bsp. 7–12 zeigen, dass die erfindungsgemäss zur Herstellung der flammwidrigen Polymermischungen verwendeten Polyphosphate verträglich mit Polystyrolharzen und Polycarbonat sind und einphasige Polymermischungen ergeben.

Tabelle Bsp. 7-12: Verträglichkeit MPO, MPC, PST-Harze

| Bsp. | Polymermischung (Filme) Bestandteile in Gew.-% | | Glasübergangs-temperatur Tg (°C) | Aussehen |
|---|---|---|---|---|
| 7 | MPC/MPO | 70/30 | 166 | transparent |
| 8 | MPC/MPO I | 70/30 | 162 | " |
| 9 | MPO/PST | 30/70 | 94 | " |
| 10 | MPO/SMA | 30/70 | 114 | " |
| 11 | MPO/SAN | 30/70 | 100 | " |
| 12 | MPC/PST/MPO | 40/30/30 | 134 | " |

Die Mischungen wurden als Filme aus der $CH_2Cl_2$-Lösung der Bestandteile erhalten. Die Filme wurden im Vakuum mehrere Tage bei 80 °C getrocknet. Die Einphasigkeit der Mischungen wird durch das Vorliegen jeweils nur einer Glasübergangstemperatur und der Transparenz der Filme belegt. $T_g$ wurde durch Differentialthermoanalyse gemessen.

**Patentansprüche**

1. Flammwidrige Polymermischungen, dadurch gekennzeichnet, dass sie

a) 5–94 Gew.% eines Polycarbonats, dessen lineare Ketten zu mindestens 85 Mol% aus wiederkehrenden Struktureinheiten der Formel (1)

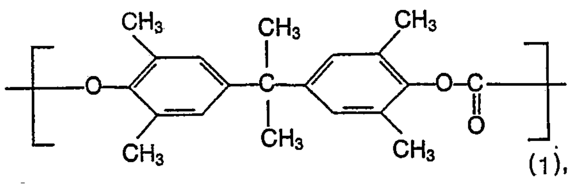

(1),

und

zu höchstens 15 Mol% aus wiederkehrenden Einheiten der Formel (2)

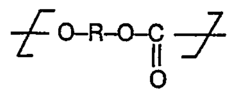

(2)

in der

–R– für einen o-, m- oder p-Phenylenrest oder einen Rest der Formel (2a)

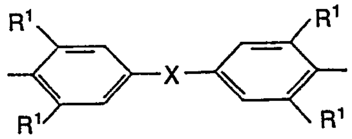

(2a)

in welcher

$R^1$ für Wasserstoff, Halogen, wie Chlor und Brom, und $C_1$–$C_3$-Alkyl steht und

X für einen $C_1$–$C_5$-Alkylen- oder Alkylidenrest, einen $C_3$–$C_6$-Cycloalkylen- oder Cycloalkylidenrest, eine Einfachbindung, –S– oder einen Rest der Formel (2b) steht,

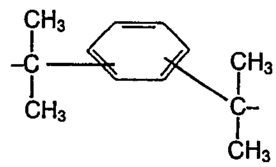

(2b)

in welcher die beiden Alkylsubstituenten in o-, m- oder p-Stellung zueinander stehen können, oder für einen Rest der Formel (2c) steht,

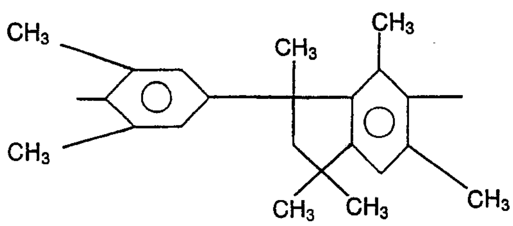

(2c)

wobei Einheiten der Formel (1) nicht umfasst sind, bestehen,

b) 94–5 Gew.-% eines Styrolpolymerisats und/oder eines Pfropfpolymerisats und

c) 1 bis 35 Gew.% eines verzweigten Polyphosphats mit Molekulargewichten Mw (gemessen durch Gelchromatographie, Eichung mit Bisphenol-A-Polycarbonat) von 1600 bis 150 000 und relativen Viskositäten von η rel von 1.01 bis 1.20, erhalten durch Umsetzung von mindestens 60 Mol.% an Bis-(3,5-dimethyl-4-hydroxyphenyl)-methan und/oder Bis-(3,5-dimethyl-4-hydroxyphenyl)-propan und maximal 40 Mol.% an Diolen der Formel 17

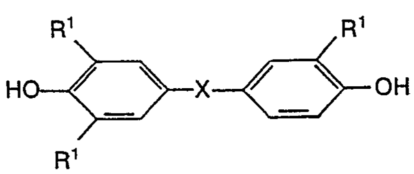

(17)

worin

X einen $C_1$–$C_5$-Alkylen- oder Alkylidenrest, einen $C_5$–$C_6$-Cycloalkylen- oder Cycloalkylidenrest, eine Einfachbindung, –S– oder

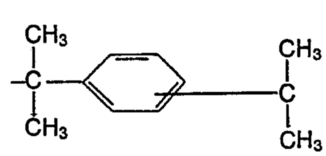

und $R^1$ H oder $CH_3$ bedeutet, und/oder der Formel (18)

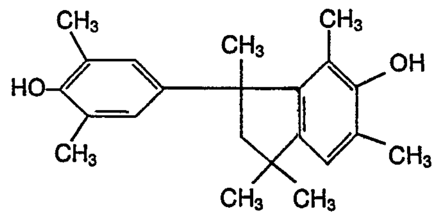

(18)

mit Phosphorsäureestern der Formel (19)

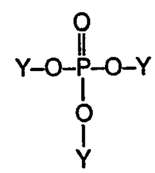

(19)

worin

Y Alkyl-, Cycloalkyl-, Aryl oder Alkylaryl-Reste bedeuten und gleich oder ungleich sein können, in Molverhältnis aromatisches Diol/Phosphat von 0.66/1 bis 2.3/1 in Gegenwart basischer Alkali- oder Erdalkaliverbindungen unter Abspaltung von Alkohol bzw. Phenol bei Temperaturen von 100 °C bis 350 °C,

d) 0–20 Gew.% einer oder mehrerer organischer Chlor- und/oder Bromverbindungen, die nur aromatisch gebundenes Chlor und/oder Brom enthalten, eine Zersetzungstemperatur oberhalb 250 °C aufweisen und bis mindestens 300 °C bei Normaldruck nicht sieden, und

e) 0–1 Gew.% Polytetrafluorethylen enthalten.

2. Verwendung von Polymermischungen nach Anspruch 1 als Überzüge für Formteile.

3. Verwendung von Polymermischungen nach Anspruch 1 zur Herstellung von Formkörpern.

**Claims**

1. Flame retardant polymer mixtures, characterized in that they contain

a) 5–94% by weight of a polycarbonate whose linear chains consist to at least 85 mol% of recurring structural units of the formula (1)

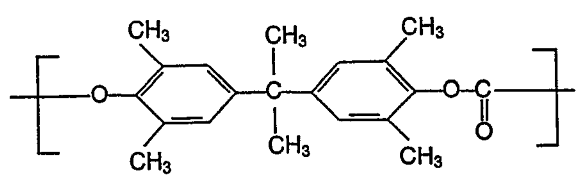

(1),

and

to a maximum of 15 mol% of recurring units of the formula (2),

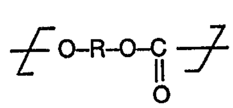

(2)

in which

–R– represents an o-, m- or p-phenylene radical or a radical of the formula (2a),

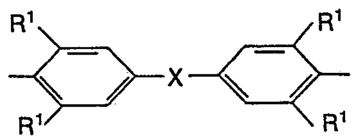

(2a)

in which

$R^1$ represents hydrogen, halogen, such as chlorine and bromine, and $C_1$–$C_3$-alkyl and

X represents an $C_1$–$C_5$-alkylene or alkylidene radical, a $C_3$–$C_6$-cycloalkylene or cycloalkylidene radical, a single bond, –S– or a radical of the formula (2b),

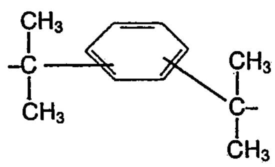

in which the two alkyl substituents may be in the o-, m- or p-position to one another, or represents a radical of the formula (2c)

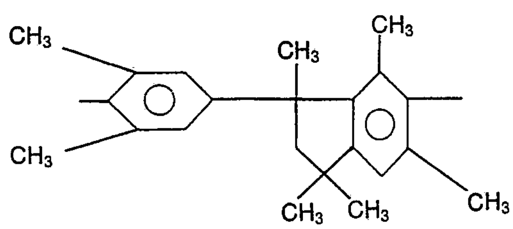

units of the formula (1) not being covered,

b) 94–5% by weight of a styrene polymer and/or a graft polymer and

c) 1 to 35% by weight of a branched polyphosphate of molecular weights Mw (measured by Gelch chromatography, calibration using bisphenol A polycarbonate) of 1600 to 150,000, and relative viscosities $\eta$ rel of 1.01 to 1.20, obtained by reaction of at least 60 mol% of bis-(3,5-dimethyl-4-hydroxyphenyl)-methane and/or bis-(3,5-dimethyl-4-hydroxyphenyl)-propane and a maximum of 40 mol% of diols of the formula 17

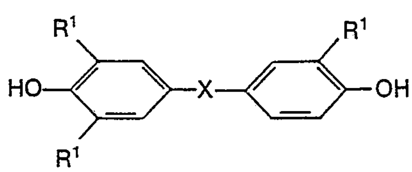

(17)

in which

X denotes a $C_1$–$C_5$ alkylene or alkylidene radical, a $C_5$–$C_6$ cycloalkylene or cycloalkylidene radical, a single bond, –S– or

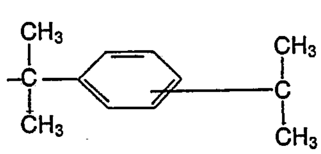

and $R^1$ denotes H or $CH_3$, and/or of the formula (18)

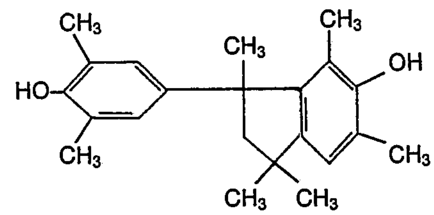

(18)

with phosphates of the formula (19)

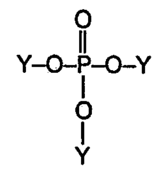

(19)

in which

Y denotes alkyl, cycloalkyl, aryl or alkylaryl radicals and may be identical or non-identical in the aromatic diol/phosphate molar ratio of 0.66/1 to 2.3/1 in the presence of basic alkali metal compounds or alkaline-earth metal compounds, with elimination of alcohol or phenol at temperatures from 100 °C to 350 °C,

d) 0–20% by weight of one or more organic chlorine and/or bromine compounds which contain only aromatically bound chlorine and/or bromine, have a decomposition temperature above 250 °C and do not boil at at least 300 °C at atmospheric pressure, and

e) 0–1% by weight of polytetrafluoroethylene.

2. Use of polymer mixtures according to claim 1 as coatings for moulded articles.

3. Use of polymer mixtures according to claim 1 for the production of moulded articles.

**Revendications**

1. Mélanges de polymères à combustion retardée, caractérisés en ce qu'ils contiennent

a) 5 à 94% en poids d'un polycarbonate dont les chaînes linéaires sont constituées à 85 moles% au moins de motifs structuraux récurrents de formule (1)

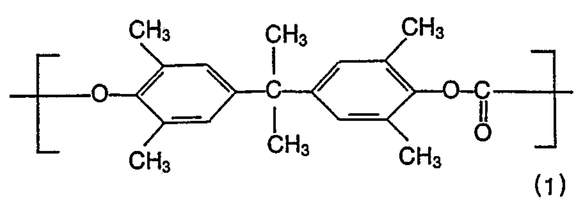

(1)

et

à 15 moles% au plus de motifs récurrents de formule (2),

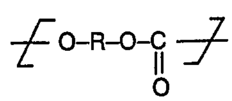

(2)

dans laquelle

–R– représente un reste o-, m- ou p-phénylène ou un reste de formule (2a)

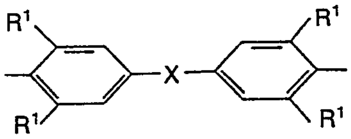

(2a)

dans laquelle

$R^1$ représente l'hydrogène, un halogène tel que le chlore et le brome et un groupe alkyle en $C_1$ à $C_3$ et

X représente un reste alkylène ou alkylidène en $C_1$ à $C_5$, un reste cycloalkylène ou cycloalkylidène en $C_3$ à $C_6$, une liaison simple, –S– ou un reste de formule (2b)

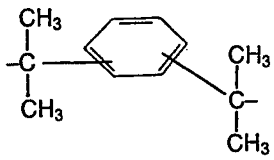

(2b)

dans laquelle les deux substituants alkyle peuvent être en position ortho, méta ou para l'un par rapport à l'autre,

ou un reste de formule (2c)

(2c)

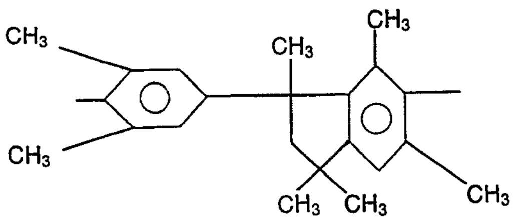

des motifs de formule (1) n'étant alors pas compris,

b) 94 à 5% en poids d'un polymère de styrène et/ou d'un polymère greffé et

c) 1 à 35% en poids d'un polyphosphate ramifié ayant des poids moléculaires $M_p$ (mesurés par chromatographie sur gel, avec étalonnage par un polycarbonate de bisphénol A) de 1600 à 150 000 et des viscosités relatives $\eta$ rel de 1,01 à 1,20, obtenu par réaction d'au moins 60 moles% de bis-(3,5-diméthyl-4-hydroxyphényl)-méthane et/ou de bis-(3,5-diméthyl-4-hydroxyphényl)-propane et au maximum 40 moles% de diols de formule (17)

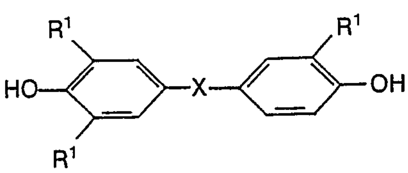

(17)

dans laquelle

X représente un reste alkylène ou alkylidène en $C_1$ à $C_5$, un reste cycloalkylène ou cycloalkylidène en $C_5$ ou $C_6$, une liaison simple, –S– ou un reste

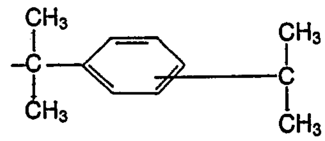

et $R^1$ représente H ou $CH_3$, et/ou de formule (18)

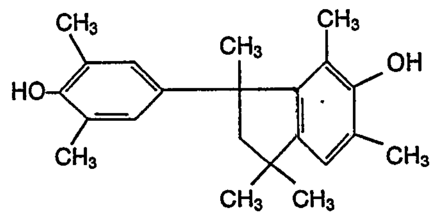

(18)

avec des esters d'acide phosphorique de formule (19)

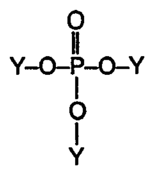

(19)

dans laquelle

les symboles Y représentent des restes alkyle, cycloalkyle, aryle ou alkylaryle et peuvent être identiques ou différents, dans un rapport molaire du diol aromatique au phosphate de 0,66/1 à 2,3/1 en présence de composés basiques de métaux alcalins ou alcalino-terreux avec élimination d'alcool ou respectivement de phénol à des températures de 100 à 350 °C,

d) 0 à 20% en poids d'un ou plusieurs composés organiques de chlore et/ou de brome qui ne contiennent que du chlore et/ou du brome en liaison aromatique qui présentent une température de décomposition au-dessus de 250 °C et dont le point d'ébullition ne se situe pas avant 300 °C au moins à la pression normale, et

e) 0 à 1% en poids de polytétrafluoréthylène.

2. Utilisation de mélanges de polymères suivant la revendication 1 comme revêtements pour pièces moulées.

3. Utilisation de mélanges de polymères suivant la revendication 1 pour la production de pièces moulées.